# EUROPÄISCHE PATENTSCHRIFT

(11) **EP 0 901 754 B1**
(45) Veröffentlichungstag und Bekanntmachung des Hinweises auf die Patenterteilung: **07.01.2004**
(21) Anmeldenummer: 98116401.5
(22) Anmeldetag: 29.08.1998
(51) Int. Cl.: A21D 10/00, A21D 8/06, A21D 13/08

(54) **Kit für die schnelle Zubereitung eines Kuchens in einem Mikrowellengerät**
Kit for the rapid preparation of a cake in a microwave-oven
Kit pout la préparation rapide de gateau dans un four à micro-ondes

(30) Priorität: 02.09.1997 DE 19738193
(43) Veröffentlichungstag der Anmeldung: 17.03.1999
(73) Patentinhaber: JUCHEM GmbH, 66571 Eppelborn (DE)
(72) Erfinder: Juchem, Andrea, 66571 Eppelborn (DE)
(74) Vertreter: Luderschmidt, Schüler & Partner GbR

(56) Entgegenhaltungen:
- GB-A- 2 179 838
- US-A- 1 942 212
- US-A- 4 515 824
- US-A- 4 857 353
- US-A- 5 015 486

## Beschreibung

Die Erfindung betrifft eine Anordnung für die schnelle Zubereitung eines Kuchens in einem Mikrowellengerät.

Bei der Herstellung von Backwaren bildet der in Backöfen unterschiedlicher Bauweise stattfindende Backprozeß die bestimmende Produktionsphase. Hierbei werden durch Erhitzen die schwer verdaulichen Teigstücke in feste, haltbare und insbesondere leicht verdauliche Backwaren übergeführt. Im herkömmlichen Backprozeß werden Kuchenteige im Backofen bei trockener Hitze zwischen 120-200°C gebacken. Während des Backens entsteht durch den langsamen Wärmetransport im Teig in der äußeren Schicht der Teigstücke ein steiler Temperaturgradient. Gegen Ende der Backzeit wird im Innern eine Temperatur von ca. 98-106°C erreicht. Das bei der Teigherstellung zugesetzte Wasser verdampft dabei nur im Krustenbereich.

Im Verlauf des Backprozesses. bei der sog. Stärkeverkleisterung, wird die Stärkestruktur des Teiges in Gegenwart von Wasser irreversibel zerstört. Diese Stärkeverkleisterung beginnt zwischen 55 und 60°C und ist spätestens bei 90°C abgeschlossen. Das für die Verkleisterung benötigte Wasser wird von den Kleberproteinen (Gluten) des Weizens gestellt, die bei ca. 70°C unter Gerinnung das Wasser an die Stärke abgeben, die damit verkleistert und oberhalb von 60°C geliert. Dieser Prozeß bedingt die Verdaulichkeit des Backwerks. Zusätzlich scheidet sich aus dem Lockerungsmittel Kohlendioxid ab, welches die Teiglockerung unter Bildung von Poren bewirkt. Die geronnenen Kleberproteine und die verkleisterte Stärke bilden dann das Gerüst des Backwerks.

Beim herkömmlichen Backprozess kommt es in der Außenschicht des Teiges bei über 100°C, typischerweise zwischen 110 und 140°C auf nichtenzymatischem Wege zu einem Abbau der Stärke zu Dextrinen, Di- und Monosacchariden und zur Maillard-Reaktion. Diese nichtenzymatische Bräunung (Maillard-Reaktion) ist für die typische Ausbildung des Geschmacks und die Farbe der Kruste verantwortlich.

Kuchen gehören zu der Gruppe "Feine Backwaren", die sich von Brot und Kleingebäck nicht nur durch ihre Bestandteile, sondern auch geschmacklich unterscheiden. Kuchen enthalten mindestens 10 Gewichtsteile an rezepturmäßig zugesetzten Fettstoffen und/oder Zuckerarten auf 90 Gewichtsteile Getreidemahlerzeugnisse und/oder Stärke. Außer Getreideerzeugnissen und Fettstoffen sowie Zuckerarten werden an sonstigen Rezepturbestandteilen noch Salz, Hefe, Backtriebmittel, Säuerungsmittel, Gewürze, Aromen und Backmittel, Stärke, Ölsamen, Trockenfrüchte, Milcherzeugnisse, Eier, Obstfüllungen u.a. verwendet.

Während bei konventioneller Zubereitung von Kuchen die Erhitzung des Kuchenteigs im Verlaufe des Backprozesses aus konduktiver und konvektiver Erwärmung resultiert, beruht die von Mikrowellen in Lebensmitteln hervorgerufene Erwärmung auf der direkten Wechselwirkung mit Molekülen polarer Struktur (Dipole). Die Größe der Wechselwirkung und die daraus erzeugte Hitze ist abhängig von der Zusammensetzung des Lebensmittels. Mikrowellen mit hoher Schwingungszahl dringen unmittelbar ins Innere von Lebensmitteln ein und bringen Fett- und Wassermoleküle in Schwingung. Durch die entstehende Reibungswärme wird das Lebensmittel in wenigen Minuten erhitzt und gegart. Die Erhitzung größeren Garguts bis ins Zentrum beruht dann auf Wärmeleitung, da die Mikrowellen nur bis zu einer bestimmten Tiefe in das Lebensmittel einzudringen vermögen.

Im Vergleich mit dem konventionellen Backprozeß ist im Mikrowellenherd die Garzeit für zu behandelnde Lebensmittel beträchtlich kürzer. Es wäre daher wünschenawert, auch beim Backen von Kuchen, unter Verwendung eines Mikrowellengeräts diese verkurzte Garzeit ausnutzen zu können, wobei dann aber auch die Zeit zur Vorbereitung des Teiges in einem vernünftigen Verhältnis zur Backzeit stehen sollte.

Andererseits aber, da das Backgut von innen aufgeheitzt wird, können die beim herkömmlichen Backprozeß mit trockener Hitze außerhalb des Backguts erreichten Temperaturen mit einem Mikrowellengerät nicht erzielt werden. Insbesondere wird die Temperatur von 110-140°C, die für die nichtenzymatische Bräunung an der Oberfläche und zur Bildung von Dextrinen und Aromastoffen nötig ist, nicht erreicht. Es kommt also nicht zu der beim konventionellen Backprozeß typischen Krusten- und Röstaromabildung.

Indessen gibt es auch Kuchensorten, bei denen eine Krustenbildung durchaus nicht erwünscht ist. Beim Backen derartiger Kuchen in einem Mikrowellengerät steht man dann vor dem Problem, wie bei der Kürze der Garzeit aus dem unstrukturierten Teig ein Backwerk mit der für Kuchen typischen Konsistenz und für den jeweiligen Kuchen charakteristischen Geschmacksprofil erhalten werden kann.

Die Herstellung von Backwaren in Mikrowellengeräten ist im Stand der Technik prinzipiell bekannt. K. Lorenz et al. beschreibt beispielsweise in FOOD TECHNOLOGY, Dec. 1973, 28-36 (Baking with Microwave Energy) das Ausbacken verschiedener, in mikrowellendurchlässigen Behältern aus Plexiglas befindlichen Brotsorten und deren Vergleich im Hinblick auf Geschmack und Aussehen. wenn sie in herkömmlichen Backöfen ausgebacken wurden. Die Zubereitung des Brotteiges, einschließlich der eigentlichen Teigherstellung, der Teiglockerung und der Teigruhe betrug jedoch ein Vielfaches der eigentlichen Backzeit in der Mikrowelle und stand somit zu dieser in keinem vernünftigen Verhältnis.

Ein ähnliches Verfahren wird in der DE-OS 27 29 241 beschrieben. wo halbgebackene Brötchen in der Mikrowelle fertig ausgebacken werden. Auch hier beträgt die Herstellungszeit des Teiges ein Mehrfaches der Ausbackzeit in der Mikrowelle. Andererseits sind im Stand der Technik auch Backfertigmischungen bekannt, insbesondere für die Zubereitung von Kuchen, welche dann nur noch unter Zusatz von flüssigen oder halbflüssigen Ingredienzien, wie z.B, Wasser. Milch, Vollei, Fett oder Öl zu einem ausbackfähigen Teig verrührt werden müssen. Derartige Fertigmischungen sind aber vorzugsweise auch nur für das Ausbacken in herkömmlichen Backöfen bestimmt, wobei sie in ihrer Zusammensetzung auf typische Krusten- und Röstaromabildung abgestimmt sind.

Von der Firma ALSA wird in Frankreich eine für die Mikrowelle geeignete Kuchenfertigmischung vertrieben. Diese Mischung wird in einem Beutel aufbewahrt, der seinerseits in einer mikrowellentauglichen, quaderförmigen Form liegt, wobei das Ganze nochmals in einem Karton verpackt ist. Die Kuchenfertigmischung muß jedoch unter Zugabe von Milch, Vollei und zerlassener Butter in einer gesonderten Schüssel zusammengerührt werden, bevor sie in die quaderförmige Form gefüllt und dann in der Mikrowelle ausgebacken werden kann.

Der Erfindung liegt daher die Aufgabe zugrunde, der Hausfrau eine Anordnung für die schnelle Zubereitung eines Kuchens an die Hand zu geben, mit welcher ohne größeren Aufwand oder zusätzliches Geschirr binnen weniger Minuten im Mikrowellenherd ein Backwerk erhalten werden kann, das mit seinem sensorischen Gesamtbild den an einen Kuchen zu stellenden Anforderungen vollauf genügt.

Die Lösung der Aufgabe erfolgt erfindungsgemäß mit den Merkmalen des Anspruchs 1. Vorteilhafte Ausführungsformen sind Gegenstand der Unteransprüche.

Der Vorteil der erfindungsgemäßen Lösung besteht darin, daß durch die Integration der eigentlichen Kuchenform in die Verpackungseinheit zum einen die Instantmischung direkt, ohne weiteren Verpackungsbeutel in der Form aufbewahrt werden kann und zum anderen beim Zubereiten des Teiges in dieser Form nur noch flüssige Zusätze in Form definierter Mengen an Wasser und Speiseöl sowie ein Ei (pro 100 g Kucheninstantmischung) benötigt werden, um dann nach homogenem Verrühren zu einem Teig unmittelbar in das Mikrowellengerät gestellt werden zu werden, wo sich dann binnen weniger Minuten (je nach Leistung des Geräts) Backwerke mit feinporiger, gleichmäßiger Krume, bei sehr guter Feuchtigkeit erhalten lassen.

Bekanntlich durchdringen Mikrowellen Porzellan, Glas, Keramik, Kunststoffe und Pappe ohne diese unmittelbar zu erwärmen. Im Fall von Pappe kann das erwärmte Gargut selbst die Pappe u. U. soweit aufheizen, daß es sich entzündet. Aus diesem Grunde wird die in die gewöhnlich aus Pappe bestehende Verpackungseinheit integrierte Backform vorzugsweise mit mikrowellentauglichem Kunststoff kaschiert.

Weil sich bei eckigen Formen die Mikrowellen in den Ecken konzentrieren, wo sie dann das Gargut überhitzen oder gar verbrennen können, ist die Kuchenform rund, vorzugsweise nach unten konisch zulaufend ausgebildet. Bei einem Inhalt von 100 g Instantmischung in der Verpackungseinheit erwies sich eine Kuchenform mit 9-11 cm Durchmesser und einer Höhe von 8,5 cm als besonders geeignet, da sich darin die Mikrowellen gleichmäßig verteilten.

Die erfindungsgemäße Instant-Kuchenmischung weist folgende Grundzusammensetzung auf. Die für die jeweiligen Kuchensorten zuzusetzenden geschmacksprägenden Zusätze sind darin nicht enthalten. GDL steht als Abkürzung für Gluconsäure-5-lacton (Gluconsäure-δ-lacton). Die Prozentangaben sind in Gew.-% angegeben:

| | |
|---|---|
| Weizenmehl | 42 - 58 |
| Zucker (oder Sorbit) | 34 - 36 |
| Weizen-Stärke | 5,8 - 7 |
| mod. Stärke | 0,8 - 1,2 |
| Säuerungsmittel (GDL) | 1,2 - 1,8 |
| Natriumbicarbonat | 0,6 - 0,9 |

Da in der Instantmischung in der Verpackungseinheit oxydationsanfällige Zusätze, wie z.B. Fett, welches erst kurz vor dem Erhitzen in Form von Speiseöl zugegen wird, nicht enthalten sind, ist die Instantmischung in der in die Verpackung integrierten Form praktisch unbegrenzt lagerfähig. Dies bedeutet neben einer schnellen Zubereitung in der modernen Küche zusätzlich eine gute Vorratshaltung.

Die Instant-Kuchenmischung muß in der Form nur noch mit Wasser, Speiseöl und Vollei zu einem Teig verrührt werden, um Backwerke zu erhalten, die durch ihren optischen, olfaktorischen und gustatorischen Eindruck zu einem einwandfreien sensorischen Gesamtbild beitragen.

In den folgenden Beispielen werden zur näheren Verdeutlichung der Erfindung einige Rezepturen für erfindungsgemäß verwendbare Instant-Kuchenmischungen wiedergegeben. Zur Zubereitung des Kuchenteiges müssen pro 100 g Instantmischung
35 g Speiseöl, 30 g Wasser und ein Ei auf die in der Form befindliche Mischung gegeben und zu einem glatten Teig verrührt werden. Sodann wird der Teig im Mikrowellenherd 2 min. bei 1500 Watt oder 4 min. bei 850 Watt oder 6 min. bei 600 Watt behandelt. Der Mikrowellenstrahl darf dabei nicht abreißen. Danach wird der Kuchen vom Rand gelöst und gestürzt. Die Prozentangaben sind jeweils Gew.-%.

### Beispiel 1

| Schoko-Sandkuchen | |
|---|---|
| Weizenmehl Typ 550 | 44,35 |
| Zucker | 35,00 |
| Weizen-Stärke | 6,40 |
| mod. Stärke | 1,00 |
| Säuerungsmittel (GDL) | 1,50 |
| Natriumbicarhonat | 0,75 |
| Schokoladenstücke | 6,00 |
| Kakao | 4,50 |
| Aroma | 0,50 |

### Beispiel 2

| Vanille-Nuß-Sandkuchen | |
|---|---|
| Weizenmehl Typ 550 | 44,35 |
| Zucker | 35,00 |
| Weizen-Stärke | 6,40 |
| mod. Stärke | 1,00 |
| Säuerungsmittel (GDL) | 1,50 |
| Natriumbicarbonat | 0,75 |
| Vanille-Aroma | 0,20 |
| Walnußkerne | 0,20 |
| Pekan-Nüsse | 6,00 |

### Beispiel 3

| Birne-Rum-Sandkuchen | |
|---|---|
| Weizenmehl Typ 550 | 55,05 |
| Zucker | 35,00 |
| Weizen-Stärke | 6,40 |
| mod. Stärke | 1,00 |
| Säuerungsmittel (GDL) | 1,50 |
| Natriumbicarbonat | 0,75 |
| Birnenaroma | 0,20 |
| Rumaroma | 0,10 |

### Beispiel 4

| Diabetiker-Irish Coffee | |
|---|---|
| Weizenmehl Typ 550 | 49,80 |
| Sorbit | 35,00 |
| Weizen-Stärke | 6,40 |
| mod. Stärke | 1,00 |
| Säuerungsmittel (GDL) | 1.50 |
| Natriumbicarbonat | 0,75 |
| Schololadenstücke | 4,00 |
| Irish Coffee | 0,50 |
| Kakao | 0,80 |
| Saccharin | 0,05 |
| Cyclamat | 0,10 |

## Patentansprüche

1. Anordnung für die schnelle Zubereitung eines Kuchens in einem Mikrowellengerät, enthaltend eine pulverförmige Kuchen-Instantmischung, eine mikrowellentaugliche Kuchenform und eine Verpackung, in welcher Anordnung die Kuchenform als Verpackungsteil ausgebildet ist, in dem die pulverförmige Kuchen-Instantmischung verpackungsfrei enthalten ist, wobei die Instant-Kuchenmischung neben geschmacksprägenden Zutaten folgende Grundzusammensetzung in
Gew.-% aufweist:
| | |
|---|---|
| Weizenmehl | 42 - 58 |
| Zucker oder Sorbit | 34 - 36 |
| Weizen-Stärke | 5,8 - 7 |
| mod. Stärke | 0,8 - 1,2 |
| GDL als Säuerungsmittel | 1,2 - 1,8 |
| Natriumbicarbonat | 0,6 - 0,9 |

2. Anordnung nach Anspruch 1, in welcher die Instant-Kuchenmischung neben geschmacksprägenden Zutaten folgende Grundzusammensetzung in
Gew.-% aufweist:
| | |
|---|---|
| Weizenmehl Typ 550 | 44,35 |
| Zucker oder Sorbit | 35,00 |
| Weizen-Stärke | 6,40 |
| mod. Stärke | 1,00 |
| GDL als Säuerungsmittel | 1,50 |
| Natriumbicarbonat | 0,75 |
| Schokoladenstücke | 6,00 |
| Kakao | 4,50 |
| Aroma | 0,50 |

3. Anordnung nach Anspruch 1, in welcher die Instant-Kuchenmischung neben geschmacksprägenden Zutaten folgende Grundzusammensetzung in
Gew.-% aufweist:
| | |
|---|---|
| Weizenmehl Typ 550 | 44,35 |
| Zucker oder Sorbit | 35,00 |
| Weizen-Stärke | 6,40 |
| mod. Stärke | 1,00 |
| GDL als Säuerungsmittel | 1,50 |
| Natriumbicarbonat | 0,75 |
| Vanille-Aroma | 0,20 |
| Walnußkerne | 0,20 |
| Pekan-Nüsse | 6,00 |

4. Anordnung nach Anspruch 1, in welcher die Instant-Kuchenmischung neben geschmacksprägenden Zutaten folgende Grundzusammensetzung in
Gew.-% aufweist:
| | |
|---|---|
| Weizenmehl Typ 550 | 55,05 |
| Zucker oder Sorbit | 35,00 |
| Weizen-Stärke | 6,40 |
| mod. Stärke | 1,00 |
| GDL als Säuerungsmittel | 1,50 |
| Natriumbicarbonat | 0,75 |
| Bimenaroma | 0,20 |
| Rumaroma | 0,10 |

5. Anordnung nach Anspruch 1, in welcher die Instant-Kuchenmischung neben geschmacksprägenden Zutaten folgende Grundzusammensetzung in
Gew.-% aufweist:
| | |
|---|---|
| Weizenmehl Typ 550 | 49,80 |
| Zucker oder Sorbit | 35,00 |
| Weizen-Stärke | 6,40 |
| mod. Stärke | 1,00 |
| GDL als Säuerungsmittel | 1,50 |
| Natriumbicarbonat | 0,75 |
| Schokoladenstücke | 4,00 |
| Irish Coffee | 0,50 |
| Kakao | 0,80 |
| Saccharin | 0,05 |
| Cyclamat | 0,10 |

6. Anordnung nach Anspruch 1, in welcher in der Kuchenform 100 g Instant-Kuchenmischung enthalten sind.

7. Anordnung nach einem der Ansprüche 1 bis 6, in welcher die Kuchenform rund ist.

8. Anordnung nach Anspruch 7, in welcher die Kuchenform nach unten konisch ausgebildet ist.

9. Anordnung nach Anspruch 7, in welcher die Kuchenform einen Durchmesser von 9 bis 11 cm und eine Höhe von 8,5 cm aufweist.

10. Anordnung nach einem der Ansprüche 1 bis 9, in welcher die Kuchenform aus kunststoffkaschierter Pappe besteht.

## Claims

1. Arrangement for the rapid preparation of a cake in a microwave device, comprising a powdery instant cake mix, a microwave-compatible cake mould and a packaging, in which arrangement the cake mould is designed as a packaging part containing the powdery instant cake mix packaging-free, where the instant cake mix as well as taste-enhancing additives has the following basic composition in weight %:
| | |
|---|---|
| wheat flour | 42 - 58 |
| sugar or sorbitol | 34 - 36 |
| wheat starch | 5.8 - 7 |
| modified starch | 0.8 - 1.2 |
| GDL as acidifier | 1.2 - 1.8 |
| sodium bicarbonate | 0.6 - 0.9. |

2. Arrangement according to claim 1, in which the instant cake mix as well as taste-enhancing additives has the following basic composition in weight %:
| | |
|---|---|
| wheat flour type 550 | 44.35 |
| sugar or sorbitol | 35.00 |
| wheat starch | 6.40 |
| modified starch | 1.00 |
| GDL as acidifier | 1.50 |
| sodium bicarbonate | 0.75 |
| chocolate pieces | 6.00 |
| cocoa | 4.50 |
| flavourings | 0.50. |

3. Arrangement according to claim 1, in which the instant cake mix as well as taste-enhancing additives has the following composition in weight %:
| | |
|---|---|
| wheat flour type 550 | 44.35 |
| sugar or sorbitol | 35.00 |
| wheat starch | 6.40 |
| modified starch | 1.00 |
| GDL as acidifier | 1.50 |
| sodium bicarbonate | 0.75 |
| vanilla flavouring | 0.20 |
| walnut cores | 0.20 |
| pecan nuts | 6.00 |

4. Arrangement according to claim 1, in which the instant cake mix as well as taste-enhancing additives has the following basic composition in weight %:
| | |
|---|---|
| wheat flour type 550 | 55.05 |
| sugar or sorbitol | 35.00 |
| wheat starch | 6.40 |
| modified starch | 1.00 |
| GDL as acidifier | 1.50 |
| sodium bicarbonate | 0.75 |
| pear flavouring | 0.20 |
| rum flavouring | 0.10 |

5. Arrangement according to claim 1, in which the instant cake mix as well as taste-enhancing additives has the following basic composition in weight %:
| | |
|---|---|
| wheat flour type 550 | 49.80 |
| sugar or sorbitol | 35.00 |
| wheat starch | 6.40 |
| modified starch | 1.00 |
| GDL as acidifier | 1.50 |
| sodium bicarbonate | 0.75 |
| chocolate pieces | 4.00 |
| Irish coffee | 0.50 |
| cocoa | 0.80 |
| saccharin | 0.05 |
| cyclamate | 0.10 |

6. Arrangement according to claim 1, in which the cake mould contains 100 g of instant cake mix.

7. Arrangement according to any of claims 1 to 6, in which the cake mould is round.

8. Arrangement according to claim 7, in which the cake mould is tapered towards the base.

9. Arrangement according to claim 7, in which the cake mould has a diameter of 9 to 11 cm and a height of 8.5 cm.

10. Arrangement according to any of claims 1 to 9, in which the cake mould consists of plastic-laminated cardboard.

## Revendications

1. Agencement pour la préparation rapide d'un gâteau dans un appareil à micro-ondes, contenant un mélange instantané pulvérulent pour gâteau, un moule pour gâteau qui convient pour des micro-ondes et un emballage, agencement dans lequel le moule pour gâteau est réalisé sous la forme d'une partie de l'emballage, dans lequel est contenu le mélange instantané pulvérulent pour gâteau, le mélange instantané pour gâteau présentant, à côté des additifs accentuant le goût, la composition de base ci-après en % en poids :
| | |
|---|---|
| farine de froment | 42 - 58 |
| sucre ou sorbitol | 34 - 36 |
| amidon de froment | 5,8 - 7 |
| amidon modifié | 0,8 - 1,2 |
| GDL à titre d'acidifiant | 1,2 - 1,8 |
| bicarbonate de sodium | 0,6 - 0,9. |

2. Agencement selon la revendication 1, dans lequel le mélange instantané pour gâteau présente, à côté des additifs accentuant le goût, la composition de base ci-après en % en poids :
| | |
|---|---|
| farine de froment de type 550 | 44,35 |
| sucre ou sorbitol | 35,00 |
| amidon de froment | 6,40 |
| amidon modifié | 1,00 |
| GDL à titre d'acidifiant | 1,50 |
| bicarbonate de sodium | 0,75 |
| pépites de chocolat | 6,00 |
| cacao | 4,50 |
| arôme | 0,50. |

3. Agencement selon la revendication 1, dans lequel le mélange instantané pour gâteau présente, à côté des additifs accentuant le goût, la composition de base ci-après en % en poids :
| | |
|---|---|
| farine de froment de type 550 | 44,35 |
| sucre ou sorbitol | 35,00 |
| amidon de froment | 6,40 |
| amidon modifié | 1,00 |
| GDL à titre d'acidifiant | 1,50 |
| bicarbonate de sodium | 0,75 |
| arôme de vanille | 0,20 |
| noix | 0,20 |
| noix de pékan | 6,00 |

4. Agencement selon la revendication 1, dans lequel le mélange instantané pour gâteau présente, à côté des additifs accentuant le goût, la composition de base ci-après en % en poids :
| | |
|---|---|
| farine de froment de type 550 z | 55,05 |
| sucre ou sorbitol | 35,00 |
| amidon de froment | 6,40 |
| amidon modifié | 1,00 |
| GDL à titre d'acidifiant | 1,50 |
| bicarbonate de sodium | 0,75 |
| arôme de poire | 0,20 |
| arôme de rhum | 0,10 |

5. Agencement selon la revendication 1, dans lequel le mélange instantané pour gâteau présente, à côté des additifs accentuant le goût, la composition de base ci-après en % en poids :
| | |
|---|---|
| farine de froment de type 550 | 49,80 |
| sucre ou sorbitol | 35,00 |
| amidon de froment | 6,40 |
| amidon modifié | 1,00 |
| GDL à titre d'acidifiant | 1,50 |
| bicarbonate de sodium | 0,75 |
| pépites de chocolat | 4,00 |
| Irish Coffee | 0,50 |
| cacao | 0,80 |
| saccharine | 0,05 |
| cyclamate | 0,10 |

6. Agencement selon la revendication 1, dans lequel le moule pour gâteau contient 100 g de mélange instantané pour gâteau.

7. Agencement selon l'une quelconque des revendications 1 à 6, dans lequel le moule pour gâteau est de forme ronde.

8. Agencement selon revendication 7, dans lequel le gâteau est réalisé de telle sorte qu'il présente une conicité orientée vers le bas.

9. Agencement selon la revendication 7, dans lequel le moule pour gâteau présente un diamètre de 9 à 11 cm et une hauteur de 8,5 cm.

10. Agencement selon l'une quelconque des revendications 1 à 9, dans lequel le moule pour gâteau est constitué de carton auquel est contrecollée une matière synthétique.
